(19) **Europäisches Patentamt**

**European Patent Office**

**Office européen des brevets**

(11) **EP 0 851 381 B1**

(12) **FASCICULE DE BREVET EUROPEEN**

(45) Date de publication et mention de la délivrance du brevet:
**20.11.2002 Bulletin 2002/47**

(51) Int Cl.⁷: **G06K 9/00**

(21) Numéro de dépôt: **97403161.9**

(22) Date de dépôt: **26.12.1997**

(54) **Capteur optique d'empreinte digitale**

Optischer Sensor für Fingerabdrücke

Optical sensor for fingerprints

(84) Etats contractants désignés:
**AT BE DE DK FI GB NL SE**

(30) Priorité: **27.12.1996 FR 9616128**

(43) Date de publication de la demande:
**01.07.1998 Bulletin 1998/27**

(73) Titulaire: **SAGEM SA**
**75116 Paris (FR)**

(72) Inventeurs:
• **Calmel, Maryline**
**92370 Chaville (FR)**

• **Euverte, Jean Michel**
**95490 Vaureal (FR)**

(74) Mandataire: **Bloch, Gérard**
**2, square de l'Avenue du Bois**
**75116 Paris (FR)**

(56) Documents cités:
**EP-A- 0 685 814 WO-A-94/22371**
**US-A- 3 527 535 US-A- 4 681 435**
**US-A- 5 233 404**

## Description

L'invention concerne un système destiné à contrôler l'identité des personnes par la reconnaissance de leur empreinte digitale.

Un tel système peut être utilisé pour sécuriser l'accès à un lieu protégé, ou encore, à titre d'exemple, pour vérifier que le porteur d'une carte personnelle (d'identité, d'assuré social, etc.) en est bien titulaire.

L'identification d'une personne par reconnaissance de son empreinte digitale consiste à prendre une image de cette empreinte, à l'aide d'un capteur, généralement optique, capable de détecter par contraste le relief des creux et des bosses formés par les sillons à la surface du doigt et formant ce qui sera appelé par la suite empreinte digitale. L'image est ensuite traitée par traitement numérique d'image et peut être comparée à une base de données, associée au capteur, contenant une pluralité d'images d'empreinte digitale, stockées sous forme de données numériques, et respectivement associées aux identités des personnes autorisées à accéder au lieu protégé, pour reprendre cet exemple. En cas d'identité entre l'empreinte détectée et une empreinte de la base de données, l'accès est autorisé.

Dans le cas de l'utilisation d'une carte personnelle, à puce par exemple, on compare l'image d'empreinte détectée à une image stockée au préalable dans la puce de la carte, et correspondant à l'empreinte du titulaire de la carte.

Un capteur optique de détection d'empreinte digitale comprend généralement une caméra de type CCD (Charge Coupled Device) de prise de vues, un prisme, et une diode électroluminescente (LED) d'éclairage de l'empreinte.

Le prisme présente quatre faces fonctionnelles :

- une face objet de support d'empreinte digitale sur laquelle la personne à identifier doit poser son doigt;
- une face d'éclairage opposée et parallèle à la face objet, disposée au voisinage de la LED;
- une face d'observation, inclinée sur la face objet et la face d'éclairage, par laquelle la caméra CCD peut observer l'empreinte digitale sous un angle d'observation entre la direction d'observation et la normale à la face objet; et
- une face objet parasite, de couleur généralement noire, reliant la face objet et la face d'éclairage, observable conjointement avec l'empreinte digitale lors de la prise de vue, et faisant en fait office de fond de scène.

Le brevet US 5233404 décrit un capteur optique présentant ces caractéristiques.

La source d'éclairage LED est disposée au voisinage de la face d'éclairage, et la caméra CCD au voisinage de la face d'observation, l'angle d'observation étant supérieur à un angle limite $\sigma_1$ au-dessus duquel on peut observer par contraste les bosses et les creux de l'empreinte digitale, et au-dessous duquel aucun contraste n'est observable. L'angle limite ai est défini par la loi optique de Descartes.

La performance de tels capteurs dépend notamment de leur faible encombrement, de leur bonne qualité d'image, et de leur faible sensibilité à la lumière ambiante.

L'encombrement du capteur résulte surtout de la taille de son prisme, et plus particulièrement de l'épaisseur de celui-ci (perpendiculairement à la face objet) qui dépend de l'angle d'observation de la caméra CCD. En effet, plus l'angle d'observation, supérieur à l'angle $\sigma_1$, est important, plus l'épaisseur du prisme peut être réduite. Cela tient au fait qu'en observant l'empreinte digitale, on observe conjointement une zone de la face objet parasite, et plus l'angle d'observation est important plus la largeur de cette zone (perpendiculairement à la face objet) est faible. Or, comme il faut éviter d'observer l'arête du dièdre des faces objet parasite et d'éclairage, dont l'image dégraderait celle de l'empreinte, l'épaisseur du prisme est au minimum égale à la largeur observable de la zone de la face objet parasite.

La qualité de l'image est essentiellement définie par trois caractéristiques relatives à:

- la résolution du capteur, c'est-à-dire son aptitude à observer des éléments de petite taille;
- le contraste de l'image qui représente la netteté avec laquelle les sillons du doigt sont observés, et
- la distorsion notamment sur les bords d'image créant une déformation gênante de l'image.

Plus l'angle d'observation est proche de l'angle limite $\sigma_1$, meilleurs sont la résolution et le contraste. De plus, plus l'angle d'observation est important plus la distorsion est gênante.

En résumé, les capteurs, dont l'angle d'observation, supérieur à l'angle limite $\sigma_1$, est important sont peu encombrants mais n'offrent pas une bonne qualité d'image.

A l'inverse, les capteurs dont l'angle d'observation est supérieur et proche de l'angle limite $\sigma_1$, sont plus encombrants mais offrent une très bonne qualité d'image.

Le document US 3527535 décrit un capteur optique avec une indication de l'angle d'observation, à savoir 50° pour un angle limite de 45°.

Bref, dans l'art antérieur, les capteurs réalisent un compromis entre l'encombrement et la qualité d'image.

L'invention vise à obtenir et une bonne qualité d'image, et un faible encombrement.

A cet effet, l'invention concerne un capteur optique d'empreinte digitale comprenant des moyens de prise de vues, une source d'éclairage et un corps de transmission optique, avec un angle limite $\sigma_1$, laissant passer l'éclairage de la source et présentant

- une face objet support de l'empreinte digitale;
- une face d'éclairage de réception de la lumière de la source;
- une face d'observation, entre la face objet support et les moyens de prise de vues, les vues étant prises à travers le corps de transmission optique sous un angle d'observation supérieur à l'angle limite $\sigma_1$, et
- une face objet parasite, de liaison entre la face objet support et la face d'éclairage, dans le champ des moyens de prise de vues;

le capteur étant caractérisé par le fait que l'angle d'observation est sensiblement égal mais supérieur à l'angle limite $\sigma_1$, et la face objet parasite est inclinée sur la face objet support, et dans lequel les moyens de prise de vues, associés à des moyens de traitement d'image, et la source d'éclairage sont avantageusement reliés à des moyens de synchronisation, les moyens de synchronisation étant agencés pour contrôler l'éclairage de la source avec des tops d'observation des moyens de prise de vues, afin de prendre alternativement une image de l'empreinte éclairée par la source et une image de l'empreinte non éclairée par la source, et les moyens de traitement d'image étant agencés pour soustraire les deux images d'empreinte l'une de l'autre afin d'obtenir une image de l'empreinte non soumise à l'éclairage ambiant.

Grâce au choix d'un angle d'observation proche de l'angle limite $\sigma_1$, on améliore la résolution du capteur et le contraste de l'image, sans qu'il ne soit nécessaire d'augmenter l'épaisseur du corps optique pour éviter l'image de l'arête commune à la face parasite et à la face d'éclairage, du fait de l'inclinaison de cette face parasite.

On remarquera qu'il est préférable que la face objet support soit polie.

Avantageusement, la face objet parasite est de couleur noire, afin d'être absorbante.

On résout également le problème selon lequel l'angle d'observation étant proche de l'angle limite $\sigma_1$, le capteur est plus sensible à l'éclairage ambiant. En effet, avec un tel angle d'observation, la lumière extérieure risque davantage de rentrer dans le corps optique du fait de taches de gras, laissées sur la face objet support par des doigts qui polluent la face objet support, et font par conséquent disparaître l'angle limite.

De préférence, les moyens de prise de vues sont agencés pour fonctionner dans des longueurs d'onde proches de l'infrarouge.

Ainsi, l'utilisation du capteur est sans - danger pour l'utilisateur.

Enfin, la face d'éclairage est avantageusement dépolie de façon à uniformiser l'éclairage de la face objet support à l'aide de la source.

Grâce à cela, la source d'éclairage peut être rapprochée au voisinage immédiat de la face d'éclairage, ce qui diminue encore l'encombrement du capteur.

L'invention sera mieux comprise à l'aide de la description suivante d'une forme de réalisation préférée du capteur-optique d'empreinte digitale de l'invention en référence au dessin annexé sur lequel:

- la figure 1 représente une vue schématique de la forme de réalisation préférée de l'invention; et
- la figure 2 représente une coupe latérale du corps optique de la figure 1 superposée à celle de corps optiques de formes différentes.

Dans l'exemple particulier de la description qui suit, le capteur d'empreinte digitale est disposé à une entrée d'un lieu protégé d'accès sécurisé, afin de contrôler l'identité des personnes souhaitant accéder au lieu protégé par reconnaissance de leur empreinte digitale. Le capteur est destiné à élaborer, pour chacune des personnes, une image de leur empreinte, afin de la comparer à une base de données 21 contenant une pluralité d'images numériques correspondant aux empreintes digitales de personnes autorisées à accéder au lieu protégé.

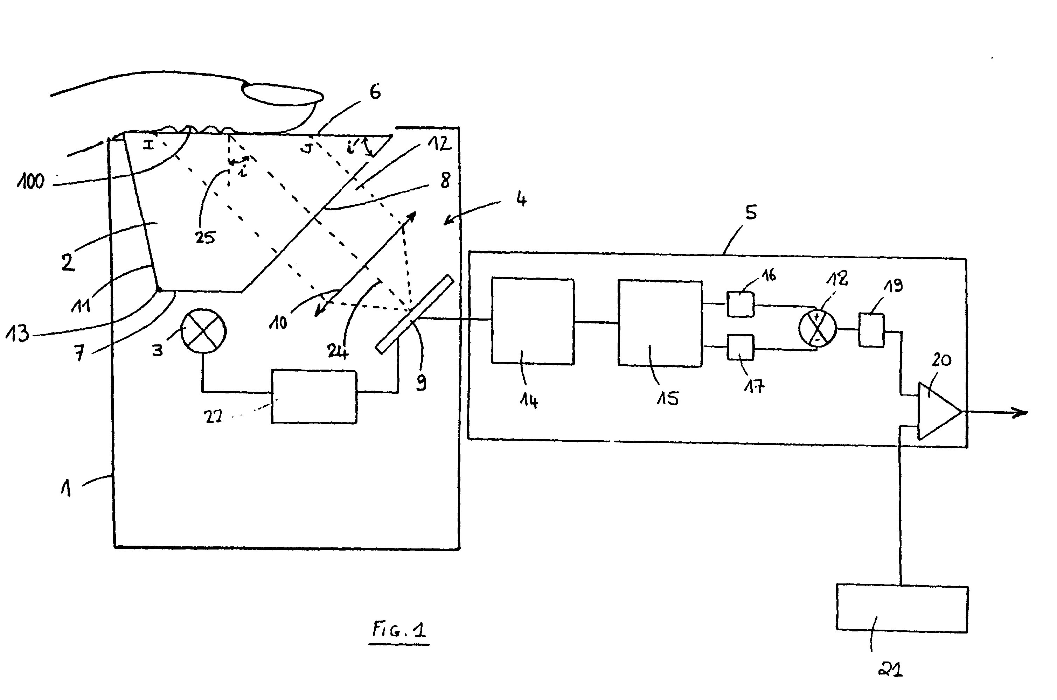

Le capteur d'empreinte digitale représenté sur la figure 1 comprend, dans un boîtier 1, un corps 2 de transmission optique, une source 3 d'éclairage de l'empreinte digitale 100, en l'espèce une diode électroluminescente (LED) destinée à émettre de la lumière dans le proche infra-rouge, et un dispositif 4 de prise de vues. Le dispositif 4 est associé à un dispositif 5 de traitement, ici numérique, d'image.

Le corps de transmission optique 2 présente ici une forme de polyèdre à six faces planes, et est constitué en un matériau laissant passer l'éclairage de la LED 3, en l'espèce un milieu transparent d'indice 1,5. On rappelle que l'air, constituant le milieu environnant le capteur d'empreinte et plus particulièrement le corps 2, est d'indice 1.

Le corps de transmission optique 2 présente une face objet 6 support d'empreinte digitale, polie, sur laquelle la personne à identifier doit poser son doigt, et une face d'éclairage 7 de réception de la lumière de la source 3, les faces objet support 6 et d'éclairage 7 étant ici en face l'une de l'autre et parallèles entre elles. La face d'éclairage 7 est dépolie afin d'uniformiser l'éclairage de l'empreinte à l'aide de la LED 3, et située au voisinage immédiat de la LED 3.

Une face d'observation 8 est disposée entre la face objet support 6 et le dispositif 4 de prise de vues, les vues étant prises à travers le corps de transmission optique 2. La face d'observation 8 est inclinée sur la face objet support 6, l'angle interne i' entre ces deux faces 8 et 6 étant sensiblement égal à un angle d'observation i explicité plus loin.

Le corps de transmission optique 2 comprend également une face objet parasite 11, de liaison entre la face objet support 6 et la face d'éclairage 7, opposée à la face d'observation 8. La face parasite 11 est inclinée sur la face support 6, l'angle interne entre les deux faces 11 et 6 étant ici de 78°. En outre, la face parasite est absorbante, et ici de couleur noire.

Le dispositif 4 de prise de vues comprend un capteur 9, en l'espèce un capteur CCD (Charge Coupled Device), de prise de vues, capable de fonctionner dans les longueurs d'onde proches de l'infrarouge, et associé à une optique de focalisation 10. La direction d'observation du dispositif 4, autrement dit l'axe optique de focalisation 24, est ici sensiblement perpendiculaire à la face d'observation 8, en conséquence l'angle d'incidence de la direction d'observation 24 par rapport à la normale 25 à la face objet support 6 est l'angle d'observation i. Le dispositif 4 de prise de vues est destiné à observer l'empreinte digitale 100 par contraste entre les creux et les bosses formés par les sillons de l'empreinte 100. Le contraste n'est observable que dans les directions d'observation pour lesquelles les rayons lumineux d'observation sont totalement réfléchis sur la face objet support 6, côté interne.

Selon la loi optique de Descartes, les indices respectifs ni et $n_2$ du corps de transmission optique 2 et de l'air définissent un angle d'observation limite $\sigma_1$ de réflexion totale sur la face objet support 6, la réflexion étant totale sur la face support 6, côté interne, si l'angle d'observation i satisfait à la condition suivante :

$$(n_1/n_2) . \sin i \geq 1,$$

sin i étant inférieur à 1, par définition.

Du respect de cette condition, il résulte un domaine angulaire d'observation du dispositif 4 de prise de vues, qui comprend les angles d'observation i tels que : $\sigma_1 \leq i \leq 90°$. Pour les indices ni (1,5) et $n_2$ (1) considérés, l'angle limite $\sigma_1$ est égal à 42°.

Dans ce domaine angulaire d'observation, le dispositif 4 de prise de vues peut observer par contraste le relief des creux et des bosses formés par les sillons de l'empreinte digitale, alors qu'il ne peut observer aucun contraste et ne peut donc pas distinguer les sillons de l'empreinte pour les angles d'observation i tels que $0 \leq i < \sigma_1$.

L'angle d'observation i du capteur d'empreinte est sensiblement égal mais supérieur à l'angle limite $\sigma_1$, afin d'observer les sillons de l'empreinte par contraste avec une distorsion minimale et une résolution optimale, et égal ici à 45°.

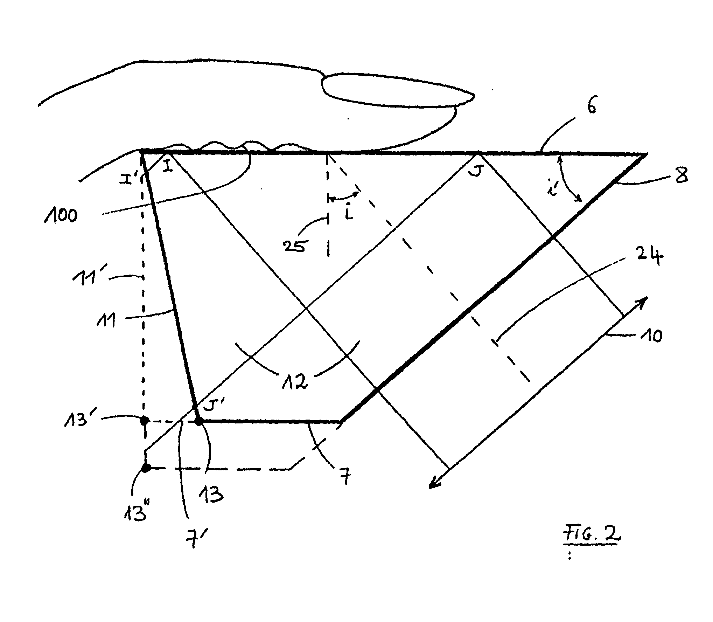

Le champ d'observation 12 du dispositif 4 de prise de vues couvre une zone utile de la face objet support 6, de largeur IJ dans le plan de coupe de la figure 2 (perpendiculaire à la face objet support 6), ainsi qu'une zone correspondante de la face objet parasite 11, de largeur I'J' dans le plan de la figure 2, observable par réflexion sur la face objet support 6. Ainsi, les deux faces support 6 et parasite 11 se trouvent dans le champ 12 observable par le dispositif 4.

La distance séparant la face objet support 6 et la face d'éclairage 7, autrement dit l'épaisseur du corps de transmission optique 2, satisfait aux deux conditions suivantes :

- l'arête 13 commune aux faces parasite 11 et d'éclairage 7 doit être située hors du champ 12 du dispositif 4 de prise de vues, afin de ne pas dégrader l'image de l'empreinte par superposition de l'image de l'arête 13, et
- l'épaisseur du corps de transmission optique 2 doit être minimale.

On soulignera ici que si la face objet parasite 11 n'était pas inclinée sur la face objet support 6 mais perpendiculaire à celle-ci, l'épaisseur du corps de transmission optique 2 devrait être supérieure pour satisfaire à la condition relative à l'arête. En effet, dans le cas où la face parasite 11 est perpendiculaire à la face support 6 et où l'épaisseur du corps de transmission est égale à celle du corps 2 décrit ci-dessus, l'arête 13', représentée en pointillé sur la figure 2, communes aux faces parasite 11' et d'éclairage 7', se trouve dans le champ 12. Pour éviter cela, il faut une arête 13" davantage éloignée de la face objet support 6', autrement dit que l'épaisseur du corps de transmission optique soit plus importante.

Les deux autres faces du corps de transmission optique 2 sont égales, parallèles entre elles et en face l'une de l'autre, et constituent deux côtes opposés du corps de transmission optique 2.

Le dispositif 5 de traitement numérique d'image, relié en entrée au capteur CCD 9 comprend:

- un bloc d'acquisition numérique 14 relié en entrée au capteur CCD 9 et destiné à transformer les signaux analogiques délivrés par le capteur CCD 9 en données numériques;
- un bloc 15 de traitement numérique d'image connecté en entrée à la sortie du bloc d'acquisition et en sortie à deux mémoires de travail 16, 17, et destiné à élaborer des images numériques d'empreinte, c'est-à-dire des images sous forme de données;
- un soustracteur 18 à deux entrées respectivement reliées aux deux mémoires de travail 16, 17 et à une sortie reliée à une autre mémoire de travail 19, et
- un comparateur 20 à deux entrées reliées respectivement à la mémoire de travail 19 de la sortie du soustracteur 18, et à une mémoire externe 21 contenant la base de données des empreintes des personnes autorisées à accéder au lieu protégé, et à une sortie reliée à une commande d'autorisation d'accès non représentée.

Le capteur comprend également un dispositif de synchronisation 22 relié au capteur CCD 9 et à la source d'éclairage 3 pour contrôler l'éclairage de la source 3 avec des tops d'observation du capteur CCD 9, comme cela sera décrit plus loin.

Après la description structurelle du capteur d'empreinte digitale, son fonctionnement va maintenant être décrit.

La personne à identifier ayant posé son doigt sur la face objet support 6, le dispositif 4 prend des vues du doigt.

En fonctionnement, le capteur CCD 9 prend donc des vues de l'empreinte digitale 100, pour obtenir des images ici réalisées sur deux trames d'observation, avec une fréquence d'image déterminée, en l'espèce 25 images par seconde, les trames consécutives étant séparées les unes des autres par des tops d'observation. En sortie, le capteur CCD 9 délivre des signaux analogiques correspondant aux vues prises.

Le dispositif de synchronisation 22 contrôle l'éclairage de la LED 3 sous la commande des tops d'observation du capteur CCD 9 et d'un signal de parité des trames, en commandant, alternativement et en continu, l'éclairage de la LED 3 durant deux trames d'observation consécutives, l'arrêt de l'éclairage durant les deux trames consécutives suivantes, puis à nouveau l'éclairage de la LED 3 durant deux trames, etc..

Le bloc d'acquisition 14 transforme les signaux analogiques délivrés par le capteur CCD 9 en données numériques correspondantes.

Le bloc 15 de traitement numérique d'image élabore une succession d'images de l'empreinte 100 à partir du flot de données délivré par le bloc d'acquisition 14 et à l'aide d'un algorithme de traitement de données. La succession d'images numériques comprend alternativement une image de l'empreinte 100 éclairée par la source 3 et une image de l'empreinte 100 non éclairée par la source 3, l'empreinte 100 étant dans tous les cas soumise à l'éclairage ambiant.

Le bloc 15 de traitement d'image mémorise sous forme numérique une image de l'empreinte éclairée par la LED 3 et une image de l'empreinte non éclairée par la LED 3, respectivement dans les deux mémoires de travail 16, 17. Puis le soustracteur 18 soustrait les deux images numériques l'une de l'autre, et l'image numérique résultante finale, représentant l'empreinte digitale 100 éclairée par la source 3 mais non soumise à l'éclairage ambiant, est stockée dans la mémoire de travail 19.

Enfin, le comparateur 20 compare cette image numérique finale aux images numériques d'empreinte de la base de données 21, et en cas d'identité seulement transmet, en sortie, un signal d'autorisation d'accès à la commande d'accès, la personne à identifier étant reconnue, par son empreinte digitale, comme faisant partie de la base de données.

A propos de la face d'éclairage, elle pourrait tout aussi bien être polie, mais devrait dans ce cas être plus éloignée de la source d'éclairage.

Dans la description qui vient d'être faite, le capteur est associé à une base de données 21. On pourrait également envisager de l'associer à un lecteur de carte personnelle à mémoire, à puce ou à bande magnétique par exemple, contenant l'image de l'empreinte digitale du titulaire de la carte personnelle.

## Revendications

**1.** Capteur optique d'empreinte digitale comprenant des moyens (4) de prise de vues, une source d'éclairage (3) et un corps de transmission optique (2), avec un angle limite $\sigma_1$, laissant passer l'éclairage de la source et présentant

- une face objet (6) support de l'empreinte digitale (100);
- une face d'éclairage (7) de réception de la lumière de la source;
- une face d'observation (8), entre la face objet support (6) et les moyens (4) de prise de vues, les vues étant prises à travers le corps de transmission optique (2) sous un angle d'observation supérieur à l'angle limite $\sigma_1$, et
- une face objet parasite (11), de liaison entre la face objet support (6) et la face d'éclairage (7), dans le champ des moyens (4) de prise de vues;

le capteur étant **caractérisé par le fait que** l'angle d'observation est sensiblement égal mais supérieur à l'angle limite $\sigma_1$, la face objet parasite (11) est inclinée sur la face objet support (6) et dans lequel les moyens (4) de prise de vues, associés à des moyens (5) de traitement d'image, et la source d'éclairage (3) sont reliés à des moyens de synchronisation (22), les moyens de synchronisation (22) étant agencés pour contrôler l'éclairage de la source (3) avec des tops d'observation des moyens (4) de prise de vues, afin de prendre alternativement une image de l'empreinte éclairée par la source (3) et une image de l'empreinte non-éclairée par la source, et les moyens (5) de traitement d'image étant agencés pour soustraire les deux images d'empreinte l'une de l'autre afin d'obtenir une image de l'empreinte non soumise à l'éclairage ambiant.

**2.** Capteur optique d'empreinte digitale selon la revendication 1, dans lequel la face objet support (6) est polie.

**3.** Capteur optique d'empreinte digitale selon l'une des revendications 1 et 2, dans lequel la face objet parasite (11) est de couleur noire, afin d'être absorbante.

**4.** Capteur optique d'empreinte digitale selon l'une des revendications 1 à 3, dans lequel les moyens (4) de prise de vues sont agencés pour fonctionner dans des longueurs d'onde proches de l'infrarouge.

**5.** Capteur optique d'empreinte digitale selon l'une des revendications 1 à 4, dans lequel la face d'éclairage (7) est dépolie pour uniformiser l'éclairage de la face objet support (6) à l'aide de la source (3).

**Patentansprüche**

1. Optischer Sensor für Fingerabdrücke mit Aufnahmemitteln (4), einer Lichtquelle (3) und einem einen Grenzwinkel $\sigma_1$ aufweisenden Körper (2) zur optischen Übertragung, der das Licht von der Quelle durchläßt und aufweist:

   - eine als Träger für den Fingerabdruck (100) dienende Objektfläche (6);
   - eine Beleuchtungsfläche (7) zur Aufnahme des Lichtes von der Quelle;
   - eine zwischen der Objektträgerfläche (6) und den Aufnahmemitteln (4) angeordnete Beobachtungsfläche (8), wobei die Aufnahmen durch den Körper (2) zur optischen Übertragung hindurch unter einem Beobachtungswinkel oberhalb des Grenzwinkels $\sigma_1$ aufgenommen werden; und
   - eine die Objektträgerfläche (6) und die Beleuchtungsfläche (7) verbindende Objekt-Störfläche (11) im Feld der Aufnahmemittel (4);

   wobei der Sensor **dadurch gekennzeichnet ist, daß** der Beobachtungswinkel im wesentlichen gleich, aber größer als der Grenzwinkel $\sigma_1$ ist, daß die Objekt-Störfläche (11) gegenüber der Objektträgerfläche (6) geneigt ist und daß die mit Bildverarbeitungsmitteln (5) verbundenen Aufnahmemittel (4) und die Lichtquelle (3) mit Synchronisiermitteln (22) verbunden sind, wobei die Synchronisiermittel (22) derart ausgebildet sind, daß sie das Licht der Quelle (3) mit Beobachtungssynchronisierimpulsen von den Aufnahmemitteln (4) steuern können, um abwechselnd ein Bild des von der Quelle (3) beleuchteten Fingerabdrucks und ein Bild des von der Quelle nicht beleuchteten Fingerabdrucks aufnehmen zu können, und wobei die Bildverarbeitungsmittel (5) derart ausgebildet sind, daß sie die beiden Bilder des Fingerabdrucks voneinander subtrahieren können, um ein nicht vom Umgebungslicht abhängiges Bild des Fingerabdrucks zu erhalten.

2. Optischer Sensor für Fingerabdrücke nach Anspruch 1,
   wobei die Objektträgerfläche (6) glatt ist.

3. Optischer Sensor für Fingerabdrücke nach Anspruch 1 oder 2, wobei die Objekt-Störfläche (11) eine schwarze Farbe hat, damit sie absorbierend ist.

4. Optischer Sensor für Fingerabdrücke nach einem der Ansprüche 1 bis 3, wobei die Aufnahmemittel (4) derart ausgebildet sind, daß sie bei Wellenlängen in der Nähe des Infrarotbereiches arbeiten.

5. Optischer Sensor für Fingerabdrücke nach einem der Ansprüche 1 bis 4, wobei die Beleuchtungsfläche (7) matt ist, um eine gleichmäßige Beleuchtung der Objektträgerfläche (6) mit Hilfe der Quelle (3) zu ermöglichen.

**Claims**

1. Optical sensor for fingerprints, comprising image gathering means (4), an illumination source (3) and an optical transmission block (2), with a critical angle $\sigma_1$, allowing the illumination from the source to pass and having

   - an object (6) support face for the fingerprint (100);
   - an illumination face (7) for receiving the light from the source :

   - a viewing face (8), between the object support face (6) and the image gathering means (4), the images being gathered through the optical transmission block (2) at an angle of observation greater than the critical angle $\sigma_1$, and
   - a parasitic object face (11), linking the object support face (6) and the illumination face (7), in the field of the image gathering means (4) ;

   the sensor being **characterised by** the fact that the angle of observation is substantially equal to but greater than the critical angle $\sigma_1$, the parasitic object face (11) is inclined onto the object support face (6), and wherein the image gathering means (4), associated with image processing means (5), and the illumination source (3) are connected to synchronisation means (22), the synchronisation means (22) being arranged to control the illumination from the source (3) with observation pips of the image gathering means (4), in order to take alternately an image of the print illuminated by the source (3) and an image of the print not illuminated by the source, and the image processing means (5) being arranged to subtract the two print images from one another in order to obtain an image of the print which is not subjected to the ambient illumination.

2. Optical sensor for fingerprints according to claim 1, wherein the object support face (6) is polished.

3. Optical sensor for fingerprints according to one of claims 1 and 2, wherein the parasitic object face (11) is black in colour so as to be absorbent.

4. Optical sensor for fingerprints according to one of claims 1 to 3, wherein the image gathering means (4) are arranged to function in wavelengths close to infrared.

5. Optical sensor for fingerprints according to one of claims 1 to 4, wherein the illumination face (7) is ground to render uniform the illumination of the object support face (6) with the aid of the source (3).

Fig. 1

EP 0 851 381 B1

FIG. 2